# EUROPEAN PATENT SPECIFICATION

(11) **EP 4 395 031 B1**
(45) Date of publication and mention of the grant of the patent: **01.04.2026**
(21) Application number: 23796705.4
(22) Date of filing: 21.04.2023
(51) Int. Cl.: B60K 1/04, H01M 50/262, H01M 50/249, B60L 53/80, B60L 50/64, B60L 50/60, H01M 50/204, H01M 50/244, H01M 50/264

(54) **REPLACEABLE BATTERY MODULE**
AUSTAUSCHBARES BATTERIEMODUL
MODULE DE BATTERIE REMPLAÇABLE

(30) Priority: 25.04.2022 KR 20220050511
(43) Date of publication of application: 03.07.2024
(73) Proprietor: LG Energy Solution, Ltd., Seoul 07335 (KR)
(72) Inventor: JUNG, Min Yong, Daejeon 34122 (KR)
(74) Representative: Plasseraud IP
(86) International application number: PCT/KR2023/005420
(87) International publication number: WO 2023/211058

(56) References cited:
- EP-B1- 2 626 233
- CN-A- 101 277 848
- CN-U- 209 843 778
- KR-A- 20130 069 111
- KR-A- 20140 108 099
- KR-A- 20200 056 714
- KR-B1- 102 249 488
- US-A- 5 903 132

## Description

### [Detailed Description of Invention]

### [Technical Field]

The present invention relates to a replaceable battery module, and an electric vehicle and a battery swap station comprising the same.

The present application claims the benefit of priority based on Korean Patent Application No. 10-2022-0050511 dated April 25, 2022.

### [Background Art]

Light electric vehicle (LEV) markets are proposed as a solution to the problem of traffic congestion and parking shortage in large cities, and their use expands to various fields such as tourist destinations, golf carts, and distribution warehouses.

A small electric vehicle equipped with a battery pack requires battery charging for driving, but has a disadvantage that it takes a long time to charge the battery.

Recently, in order to shorten the battery charging time, a battery swap method has been considered. The battery swap method means a method of replacing a used battery with a fully charged battery, and the battery swap method can provide convenience to an electric vehicle driver because the battery can be replaced within a short time.

EP2626233A2 discloses a terminal base of power supply device for electric vehicle.

### [Disclosure]

### [Technical Problem]

It is a problem to be solved by the present invention to provide a replaceable battery module capable of quickly replacing a battery pack through a simple coupling structure, and an electric vehicle and a battery swap station comprising the same.

### [Technical Solution]

In order to solve the above problem, according to one aspect of the present invention, a replaceable battery module is provided, which comprises a battery pack including a groove formed on an outer circumferential surface and a locking member movably provided in the groove, and a battery pack mounting part having a mounting space, in which the battery pack is accommodated, and an inclined protrusion detachably locked and fixed to the locking member so that a position of the battery pack disposed in the mounting space is fixed.

Also, when a force is applied in the mounting direction to mount the battery pack in the mounting space, the locking member passes through the inclined protrusion after contacting the inclined protrusion, and be locked and fixed to the inclined protrusion after passing through the inclined protrusion.

In addition, a wing part extending along the mounting direction of the battery pack may be provided in the groove. Furthermore, the locking member may be connected to the wing part.

Also, the wing part may be spaced apart from the bottom surface of the groove and may extend from one sidewall of the groove.

In addition, the locking member may comprise one end connected to the wing part to fix the position and the other end having a hook-type head part and movably provided in a first direction closer to the bottom surface of the groove or a second direction farther from the bottom surface of the groove.

Also, the other end of the locking member may be provided so that the hook-type head part is pressed by the inclined projection to move in the first direction when passing through the inclined projection in an interference-fitting manner. In addition, the other end of the locking member may be provided so that the hook-type head part is released from the force pressed by the inclined protrusion to move in the second direction when completing the passage of the inclined protrusion.

Furthermore, the hook-type head part may comprise an interference-fitting part provided so that the thickness is reduced along the mounting direction of the battery pack so as to pass through the inclined protrusion with interference-fitting, and a locking fixing part provided so that the thickness is increased along the mounting direction of the battery pack so as to be locked and fixed with the inclined protrusion when the passage is completed.

Also, the inclined protrusion may have an outside inclined part contacting the interference-fitting part when the battery pack is mounted and provided so that the thickness increases along the mounting direction of the battery pack, and an inside inclined part contacting the locking fixing part after the hook-type head part passes through the outside inclined part and provided so that the thickness decreases along the mounting direction of the battery pack.

In addition, when an external force is applied to the battery pack along the mounting direction of the battery pack, the locking member may pass through the inclined protrusion and be mounted within the mounting space. At this instance, when the battery pack is mounted in the mounting space, the interference-fitting part may pass through the inclined protrusion while sliding along the outside inclined part of the inclined protrusion.

Furthermore, when an external force is applied to the battery pack in a direction opposite to the mounting direction of the battery pack, the locking member may pass through the inclined protrusion, and deviate from the inclined protrusion, and the battery pack may be separated out of the mounting space. At this instance, when the battery pack mounted in the mounting space is separated, the locking fixing part may pass through the inclined protrusion while sliding along the inside inclined part of the inclined protrusion.

Also, the locking member may be formed of an elastic material, and the locking member may be provided so that a partial region is bent when an external force is applied thereto.

In addition, according to another aspect of the present invention, an electric vehicle comprising the replaceable battery module is provided.

Furthermore, according to another aspect of the present invention, a battery swap station comprising the replaceable battery module is provided.

### [Effects of Invention]

As described above, the replaceable battery module related to at least one example of the present invention, and the electric vehicle and the battery swap station comprising the same have the following effects.

The battery pack can be easily attached and detached through the hook structure in which the battery pack is locked and fixed in the battery pack mounting part in an interference-fitting manner, and thus the replacement of the battery pack can be quickly made.

### [Brief Description of Drawings]

Figure 1 is a cross-sectional diagram of a replaceable battery module according to one example of the present invention.
Figures 2 and 3 are operating state diagrams for explaining a process of mounting a battery pack in the replaceable battery module shown in Figure 1.
Figure 4 is a configuration diagram schematically showing an electric vehicle related to one example of the present invention.
Figure 5 is a configuration diagram schematically showing a battery swap station related to one example of the present invention.

### [Mode for Invention]

Hereinafter, a replaceable battery module according to one example of the present invention, and an electric vehicle and a battery swap station comprising the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

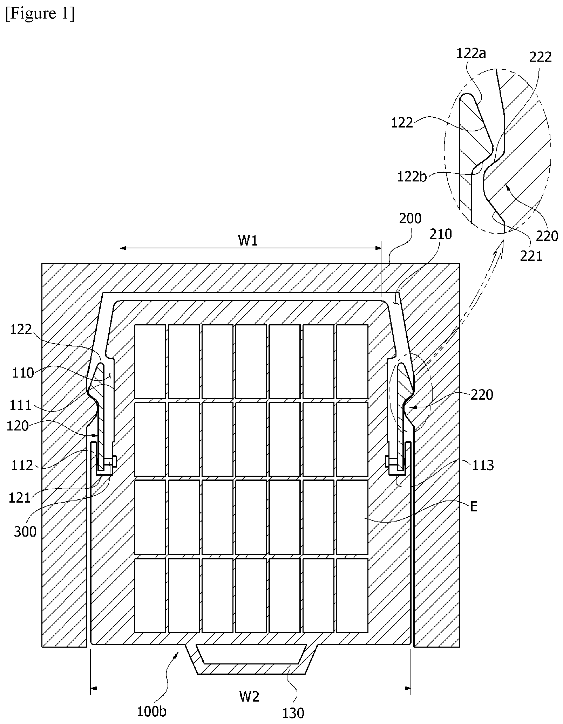

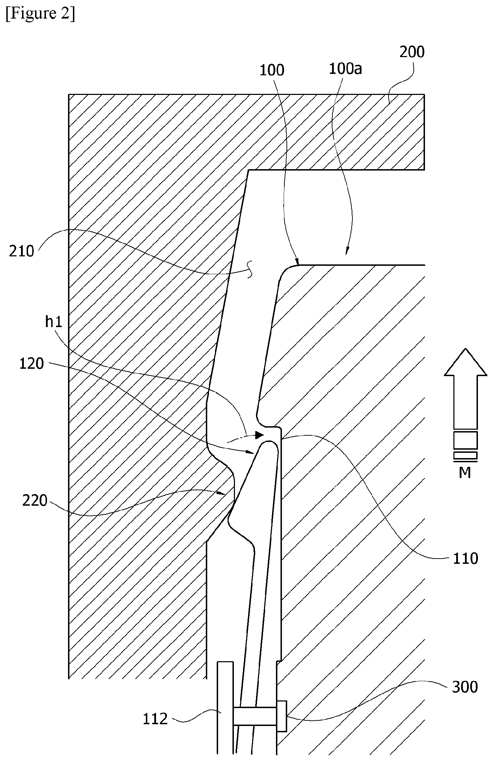

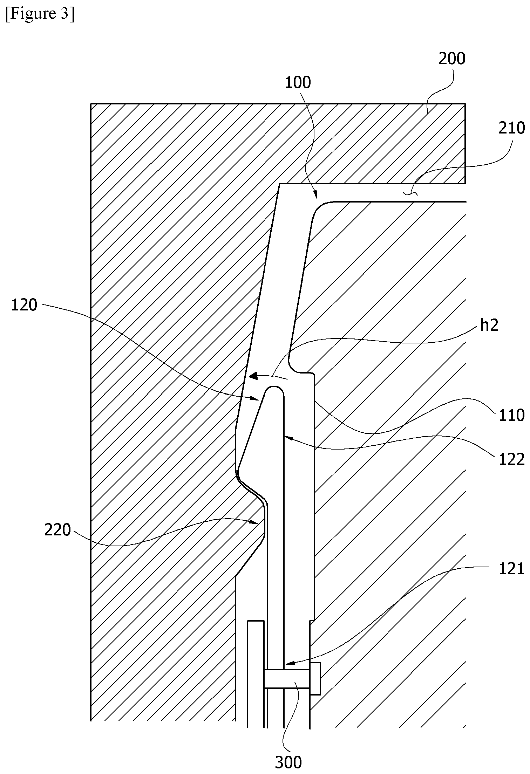

Figure 1 is a cross-sectional diagram of a replaceable battery module according to one example of the present invention, and Figures 2 and 3 are operating state diagrams for explaining a process of mounting a battery pack (100) in the replaceable battery module shown in Figure 1.

Specifically, Figure 2 is a diagram for explaining an interference fit process when a battery pack (100) is mounted, and Figure 3 is a diagram showing a mounting completion state of the battery pack (100).

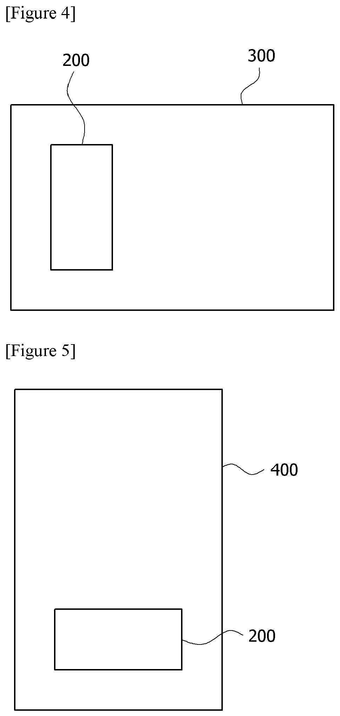

Figure 4 is a configuration diagram schematically showing an electric vehicle (300) related to one example of the present invention, and Figure 5 is a configuration diagram schematically showing a battery swap station (400) related to one example of the present invention.

The present invention relates to a replaceable battery module.

Also, the electric vehicle (300) according to one example of the present invention comprises the replaceable battery module. In addition, the battery swap station (400) according to one example of the present invention comprises the replaceable battery module. In detail, the replaceable battery module may be applied to a light electronic vehicle (LEV) or a battery swap station (also referred to as a 'battery charging station').

Referring to Figures 1 to 3, the replaceable battery module according to one example of the present invention comprises a battery pack (100) and a battery pack mounting part (200).

The battery pack mounting part (200) may be provided in an electric vehicle (300), or may be provided in a battery charging station (400).

In addition, the battery pack (100) may be electrically connected to the battery pack mounting part (200) in a state of being mounted on the battery pack mounting part (200). As the battery pack (100) and the battery pack mounting part (200) are electrically connected to each other, a power is supplied from the battery charging station (400) to the battery pack (100) so that the battery pack (100) may be charged. In addition, a power may be supplied from the battery pack (100) to a motor that is a driving source of the electric vehicle (300).

The replaceable battery module comprises a battery pack (100) including a groove (110) formed on an exterior surface and a locking member (120) movably provided in the groove (110). In addition, the replaceable battery module comprises a battery pack mounting part (200) having a mounting space (210), in which the battery pack (100) is accommodated, and an inclined protrusion (220) detachably locked and fixed to the locking member (120) so that a position of the battery pack (100) disposed in the mounting space (210) is fixed. The inclined protrusion (220) is provided to protrude into the mounting space (210).

The locking member (120) may be referred to as a hook-type locking member.

Specifically, the battery pack (100) comprises a groove (110) formed on an outer circumferential surface and a hook-type locking member (120) connected to the sidewall (113) of the groove (110).

In addition, the battery pack (200) may be provided with the grooves (110) and locking members (120) by one set on both sides in the mounting direction (M). That is, the battery pack (100) may comprise two sets of grooves (110) and hook-type locking members (120).

In the present invention, the hook-type locking member (120) is in a hook type, which is a hook-shaped locking member that is locked and fixed to the inclined protrusion (220), where the hook-type locking member (120) may be disposed so that the hook portion faces the outside of the battery pack (100). For example, in a mounting state of the battery pack (100), the hook portion may be disposed to face the inner surface of the battery pack mounting part

(200). The battery pack (100) may comprise a plurality of secondary battery cells (E) accommodated therein.

Also, the battery pack (100) may have a width (W1) of the front end (100a) and a width (W2) of the rear end (100b) that are different from each other.

The front end (100a) of the battery pack (100) is the part that first enters the mounting space (210) when sliding along the mounting direction (M), and the region located in the opposite direction to the front end (100a) is referred to as the rear end (100b). The width of the front end (100a) may be formed to be relatively narrower than the width of the rear end (100b) so that the battery pack (100) is easy to enter into the mounting space (210).

In addition, the battery pack (100) may comprise a handle (130) provided on the side of the rear end (100b).

The battery pack mounting part (200) has a mounting space (210) in which the battery pack (100) is detachably mounted, and an inclined protrusion (220) locked and fixed to the locking member (120) with interference-fitting so that the position of the mounted battery pack (100) is fixed. In order to mount the battery pack (100), a certain amount of force is required in the mounting direction (M).

For example, when the battery pack (100) is mounted in the mounting space (210), the hook portion of the hook-type locking member (120) comes into contact with the inclined protrusion (220) to prevent movement, where the hook-type engaging member (120) may pass through the inclined protrusion (220), and be locked and fixed to the inclined protrusion (220) in an interference-fitting manner.

In the replaceable battery module according to one example of the present invention, the battery pack (100) may be locked and fixed to the battery pack mounting part (200) through the hook-type locking member (120) and the inclined protrusion (220) having a relatively simple structure.

When a force is applied in the mounting direction (M) to mount the battery pack (100) in the mounting space (210), the locking member (120) may pass through the inclined protrusion (220) after contacting the inclined protrusion (220), and may be locked and fixed to the inclined protrusion (220) after passing through the inclined protrusion (220). Specifically, upon mounting the battery pack (100) in the mounting space (210) along the mounting direction (M), the hook-type locking member (120) may pass through the inclined protrusion (220) with interference-fitting when a certain or more force is applied in the mounting direction (M), and may be locked and fixed to the inclined protrusion when the passage is completed.

Conversely, in order to separate the battery pack (100) mounted in the mounting space (210), when a certain amount of force is applied in the opposite direction to the mounting direction (M), the locked and fixed hook-type locking member (120) passes through the inclined protrusion (220) in the interference-fitting manner, and is separated from the inclined protrusion, whereby the locking and fixing may be released.

In addition, a wing part (112) extending along the mounting direction (M) of the battery pack (100) may be provided in the groove (110), and the locking member (120) may be connected to the wing part (112). At this time, the wing part (112) may be spaced apart from the bottom surface (111) of the groove (110), and extend from one sidewall (113) of the groove

(110). As one example, the groove (110) may comprise a wing part (112) formed by extending from one sidewall (113) to the central portion of the groove (110) at a regular interval from the bottom surface (111) of the groove, and the hook-type locking member (120) may be connected to the wing part (112).

The hook-type locking member (120) may be connected to the inner surface of the wing part (112) facing the bottom surface (111) of the groove (110). The replaceable battery module may comprise a separate connection member (300) connecting the hook-type locking member (120) and the inner surface of the wing part (112), and for example, the connection member (300) may be a screw. However, the connection member (300) is not limited to the screw, and various types of well-known connection parts, or connection methods may be used without limitation.

The locking member (120) may comprise one end (121) connected to the wing part (112) to fix the position, and the other end (122) movably provided in a first direction (h1) closer to the bottom surface (111) of the groove (110) or a second direction (h2) farther from the bottom surface (111) of the groove (110). The other end (122) may have a hook-type head part.

The hook-type locking member (120) has a predetermined length. One end (121) of the locking member (120) may be connected to the wing part (112) to fix the position, and the position of the other end (122) may be moved. The other end (122) refers to the end in the opposite direction of one end (121).

The locking member (120) may be formed of an elastic material, and the locking member (120) may be provided so that a partial region is bent when an external force is applied. At this time, when an external force is applied, the other end (122) may be bent, and the position may be moved in the first direction (h1) or the second direction (h2).

In addition, the other end (122) may be provided with a hook-shaped hook-type head part. The hook-type head part may be formed by adjusting the thickness of the other end (122). In this document, the other end (122) may be understood to refer to a hook-type head part.

The hook-type head part (122) may be locked and fixed to the inclined protrusion (220) with the interference-fitting. The hook-type head part (122) of the hook-type locking member (120) may move in the first direction (h1) by an external force, and may return to its original position while moving in the second direction (h2) when the external force is released.

The external force may be, for example, a force pressed from the inclined protrusion (120) when passing through the inclined protrusion (220).

Referring to Figure 2, when the other end (122) of the locking member (120) passes through the inclined protrusion (220) in the interference-fitting manner, the hook-type head part (122) may be pressed from the inclined protrusion (220) to move in the first direction (h1), and referring to Figure 3, when the passage of the hook-type head part (122) through the inclined protrusion (220) is completed, the hook-type head part (122) may move in the second direction (h2) as the force pressed from the inclined protrusion (220) is released.

In one example, the hook-type head part (122) may comprise an interference-fitting part (122a) provided so that the thickness is reduced along the mounting direction (M) of the battery pack (100) so as to be capable of passing through the inclined protrusion (220) with interference-fitting, and a locking fixing part (122b) provided so that the thickness is increased along the mounting direction (M) of the battery pack (100) so as to be locked and fixed with the inclined protrusion (220) when the passage through the inclined protrusion (220) is completed.

That is, by adjusting the thickness of the other end (122) of the locking member (120) along the mounting direction (M) of the battery pack (100), the interference-fitting part (122a) and the locking fixing part (122b) may be formed.

The interference-fitting part (122a) may have a first inclined surface formed to be inclined to be capable of passing through the inclined protrusion (220) with interference-fitting, and the locking fixing part (122b) may have a second inclined surface formed to be inclined to be locked and fixed to the inclined protrusion (220) when the passage of the hook-type head part (122) is completed. At this time, the first and second inclined surfaces may be inclined in opposite directions to each other.

The locking fixing part (122b) may be positioned closer to one end (121) side than the interference-fitting part (122a). The inclination angle of the first inclined surface in the interference-fitting part (122) may be gentler than the inclination angle of the second inclined surface in the locking fixing part (122b).

Also, the force required for interference-fitting may be changed according to the inclination angle of the first inclined surface, and the inclination angle of the second inclined surface in the locking fixing part (122b) may be formed at a predetermined angle or more to prevent separation after locking and fixing to the inclined protrusion (220).

In addition, the inclined protrusion (220) may have an outside inclined part (221) contacting the interference-fitting part (122a) when the battery pack (100) is mounted and provided so that the thickness increases along the mounting direction (M) of the battery pack (100), and an inside inclined part (222) contacting the locking fixing part (122b) after the hook-type head part (122) passes through the outside inclined part (221) and provided so that the thickness decreases along the mounting direction (M) of the battery pack (100).

The outside inclined part (221) may be formed to be inclined at an inclination angle corresponding to the first inclined surface of the interference-fitting part (122a), and the inside inclined part (221) may be formed to be inclined at an inclination angle corresponding to the second inclined surface of the locking fixing part (122b). The outside inclined part (221) may have a gentler inclination angle than the inside inclined part (222).

When the battery pack (100) is mounted, the interference-fitting part (122a) may pass through the inclined protrusion (220) while sliding along the inclination of the outside inclined part (221) in the inclined protrusion (220). The interference-fitting is performed in the process that the interference-fitting part (122a) passes through the inclined protrusion (220).

In addition, when the battery pack (100) mounted in the mounting space (210) is separated, the locking fixing part (122b) may pass through the inclined protrusion while sliding along the slope of the inside inclined part (222) of the inclined protrusion (220).

When the battery pack (100) is mounted, the hook-type locking member (120) may move from the outside to the inside of the inclined protrusion (220), and when the battery pack (100) is separated, the hook-type locking member (120) may move from the inside to the outside of the inclined protrusion (220). The outside of the inclined protrusion (220) means a portion positioned adjacent to an inlet where the battery pack (100) is mounted.

In addition, the hook-type locking member (120) may be formed of an elastic material. For example, the hook-type locking member (120) may be formed of a POM material. As the hook-type locking member (120) is formed of an elastic material, it may be pressed from the inclined protrusion (220) to move in the first direction (h1), and then when the pressed force is released, it may return to the original position while moving in the second direction (h2).

The replaceable battery module according to the present invention may further comprise a cover (not shown) coupled to the battery pack mounting part (200).

The cover is coupled to the battery pack mounting part (200) so that the mounting space (210) of the battery pack mounting part (200) is sealed. The cover serves to protect the battery pack (100) so that the mounted battery pack (100) is prevented from being separated and is not damaged by external impact.

Referring to Figure 4, the present invention may be an electric vehicle (300) comprising the above-described replaceable battery module. The electric vehicle (300) comprises a battery pack mounting part (200), where a battery pack may be detachably mounted on the battery pack mounting part (200). The type of the electric vehicle (300) is not particularly limited if the replaceable battery pack may be mounted, which may be a small, medium, or large electric vehicle, and preferably may be a small electric vehicle. The small electric vehicle may be exemplified by, for example, an electric scooter, an electric bicycle, or a quick board, and the like. The electric vehicle comprising the above-described replaceable battery pack has an advantage of shortening a replacement time when replacing an old battery pack with a new battery pack.

Referring to Figure 5, the present invention relates to a battery swap station (400) comprising the above-described replaceable battery module. The battery swap station (400) may supply power to the battery pack through the battery pack mounting part (200) to charge the battery pack. The battery swap station comprising the above-described replaceable battery pack has an advantage that the replacement time consumed when mounting an old battery pack or separating a fully charged battery pack is reduced.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### [Explanation of Reference Numerals]

100: battery pack
200: battery pack mounting part
300: electric vehicle
400: battery swap station

## Claims

1. A replaceable battery module comprising:
a battery pack (100) including a groove (110) formed on an outer circumferential surface and a locking member (120) movably provided in the groove; and
a battery pack mounting part (200) having a mounting space (210), in which the battery pack is accommodated, and an inclined protrusion (220) detachably locked and fixed to the locking member so that a position of the battery pack disposed in the mounting space is fixed,
wherein when a force is applied in the mounting direction to mount the battery pack in the mounting space, the locking member passes through the inclined protrusion after contacting the inclined protrusion, and is locked and fixed to the inclined protrusion after passing through the inclined protrusion.

2. The replaceable battery module according to claim 1, wherein
a wing part (112) extending along the mounting direction of the battery pack is provided in the groove, and
the locking member is connected to the wing part.

3. The replaceable battery module according to claim 2, wherein
the wing part is spaced apart from the bottom surface (111) of the groove and extends from one sidewall (113) of the groove.

4. The replaceable battery module according to claim 2, wherein
the locking member comprises: one end (121) connected to the wing part to fix the position; and
the other end (122) having a hook-type head part and movably provided in a first direction (h1) closer to the bottom surface of the groove or a second direction (h2) farther from the bottom surface of the groove.

5. The replaceable battery module according to claim 4, wherein in the other end of the locking member,
the hook-type head part is pressed by the inclined projection to move in the first direction when passing through the inclined projection in an interference-fitting manner, and
the hook-type head part is released from the force pressed by the inclined protrusion to move in the second direction when completing the passage of the inclined protrusion.

6. The replaceable battery module according to claim 4, wherein
the hook-type head part comprises: an interference-fitting part (122a) provided so that the thickness is reduced along the mounting direction of the battery pack to be capable of passing through the inclined protrusion with interference-fitting; and
a locking fixing part (112b) provided so that the thickness is increased along the mounting direction of the battery pack to be locked and fixed with the inclined protrusion when the passage is completed.

7. The replaceable battery module according to claim 6, wherein
the inclined protrusion has: an outside inclined part (221) contacting the interference-fitting part when the battery pack is mounted and provided so that the thickness increases along the mounting direction of the battery pack; and
an inside inclined part (222) contacting the locking fixing part after the hook-type head part passes through the outside inclined part and provided so that the thickness decreases along the mounting direction of the battery pack.

8. The replaceable battery module according to claim 7, wherein when the battery pack is mounted,
the interference-fitting part passes through the inclined protrusion while sliding along the outside inclined part of the inclined protrusion.

9. The replaceable battery module according to claim 6, wherein when the battery pack mounted in the mounting space is separated,
the locking fixing part passes through the inclined protrusion while sliding along the inside inclined part of the inclined protrusion.

10. The replaceable battery module according to claim 1, wherein the locking member is made of an elastic material.

11. The replaceable battery module according to claim 1, wherein
the locking member is provided so that a partial region is bent when an external force is applied thereto.

12. An electric vehicle comprising the replaceable battery module according to claim 1.

13. A battery swap station comprising the replaceable battery module according to claim 1.

## Patentansprüche

1. Austauschbares Batteriemodul, umfassend:
einen Batteriepack (100), welcher eine Nut (110), welche an einer äußeren Umfangsfläche gebildet ist, und ein Verriegelungselement (120) umfasst, welches beweglich in der Nut bereitgestellt ist; und
einen Batteriepack-Montageteil (200), welcher einen Montageraum (210), in welchen der Batteriepack aufgenommen ist, und einen geneigten Vorsprung (220) aufweist, welcher lösbar verriegelt ist und an das Verriegelungselement derart fixiert ist, dass eine Position des Batteriepacks, welcher in dem Montageraum angeordnet ist, fixiert ist,
wobei, wenn eine Kraft in der Montagerichtung aufgebracht wird, um den Batteriepack in dem Montagraum zu montieren, das Verriegelungselement durch den geneigten Vorsprung tritt, nachdem es den geneigten Vorsprung kontaktiert, und verriegelt wird und an den geneigten Vorsprung fixiert wird, nachdem es durch den geneigten Vorsprung tritt.

2. Austauschbares Batteriemodul nach Anspruch 1, wobei
ein Flügelteil (112), welcher sich entlang der Montagerichtung des Batteriepacks erstreckt, in der Nut bereitgestellt ist, und
das Verriegelungselement mit dem Flügelteil verbunden ist.

3. Austauschbares Batteriemodul nach Anspruch 2, wobei
der Flügelteil von der Bodenfläche (111) der Nut beabstandet ist und sich von einer Seitenwand (113) der Nut erstreckt.

4. Austauschbares Batteriemodul nach Anspruch 2, wobei
das Verriegelungselement umfasst: ein Ende (121), welches mit dem Flügelteil verbunden ist, um die Position zu fixieren; und
das andere Ende (122) einen hakenartigen Kopfteil aufweist und beweglich in einer ersten Richtung (h1), welche näher an der Bodenfläche der Nut ist, oder in einer zweiten Richtung (h2) bereitgestellt ist, welche weiter von der Bodenfläche der Nut entfernt ist.

5. Austauschbares Batteriemodul nach Anspruch 4, wobei, in dem anderen Ende des Verriegelungselements,
der hakenartige Kopfteil durch den geneigten Vorsprung gedrückt wird, um sich in der ersten Richtung zu bewegen, wenn er durch den geneigten Vorsprung in einer presspassenden Weise tritt, und
der hakenartige Kopfteil von der Kraft gelöst wird, welche durch den geneigten Vorsprung gedrückt wird, um sich in der zweiten Richtung zu bewegen, wenn der Durchgang des geneigten Vorsprungs abgeschossen ist.

6. Austauschbares Batteriemodul nach Anspruch 4, wobei
der hakenartige Kopfteil umfasst: einen Presspassungsteil (122a), welcher bereitgestellt ist, so dass die Dicke entlang der Montagerichtung des Batteriepacks reduziert ist, um in der Lage zu sein, durch den geneigten Vorsprung mit einer Presspassung zu treten; und
einen Verriegelungsfixierungsteil (112b), welcher bereitgestellt ist, so dass die Dicke entlang der Montagerichtung des Batteriepacks erhöht ist, um mit dem geneigten Vorsprung verriegelt und fixiert zu sein, wenn der Durchgang abgeschlossen ist.

7. Austauschbares Batteriemodul nach Anspruch 6, wobei
der geneigte Vorsprung aufweist: einen äußeren geneigten Teil (221), welcher den Presspassungsteil kontaktiert, wenn der Batteriepack montiert ist, und bereitgestellt ist, so dass die Dicke entlang der Montagerichtung des Batteriepacks ansteigt; und
einen inneren geneigten Teil (222), welcher den Verriegelungsfixierungsteil kontaktiert, nachdem der hakenartige Kopfteil durch den äußeren geneigten Teil tritt und bereitgestellt ist, so dass die Dicke entlang der Montagerichtung des Batteriepacks abnimmt.

8. Austauschbares Batteriemodul nach Anspruch 7, wobei, wenn der Batteriepack montiert wird,
der Presspassungsteil durch den geneigten Vorsprung tritt, während er entlang des äußeren geneigten Teils des geneigten Vorsprungs gleitet.

9. Austauschbares Batteriemodul nach Anspruch 6, wobei, wenn der Batteriepack, welcher in dem Montageraum montiert ist, separiert wird,
der Verriegelungsfixierungsteil durch den geneigten Vorsprung tritt, während er entlang des inneren geneigten Teils des geneigten Vorsprungs gleitet.

10. Austauschbares Batteriemodul nach Anspruch 1, wobei das Verriegelungselement aus einem elastischen Material hergestellt ist.

11. Austauschbares Batteriemodul nach Anspruch 1, wobei
das Verriegelungselement bereitgestellt ist, so dass ein Teilbereich gebogen wird, wenn eine externe Kraft darauf angewendet wird.

12. Elektrisches Fahrzeug, welches das austauschbare Batteriemodul nach Anspruch 1 umfasst.

13. Batterieaustauschstation, welche das austauschbare Batteriemodul nach Anspruch 1 umfasst.

## Revendications

1. Module de batterie remplaçable comprenant :
un bloc-batterie (100) comportant une rainure (110) formée sur une surface circonférentielle extérieure et un élément de verrouillage (120) prévu de manière mobile dans la rainure ; et
une partie de montage de bloc-batterie (200) ayant un espace de montage (210), dans lequel le bloc-batterie est logé, et une saillie inclinée (220) verrouillée et fixée de manière détachable à l'élément de verrouillage de sorte qu'une position du bloc-batterie disposé dans l'espace de montage soit fixe,
dans lequel lorsqu'une force est appliquée dans la direction de montage pour monter le bloc-batterie dans l'espace de montage, l'élément de verrouillage passe à travers la saillie inclinée après le contact avec la saillie inclinée, et est verrouillé et fixé à la saillie inclinée après un passage à travers la saillie inclinée.

2. Module de batterie remplaçable selon la revendication 1, dans lequel
une partie ailette (112) s'étendant le long de la direction de montage du bloc-batterie est prévue dans la rainure, et
l'élément de verrouillage est relié à la partie ailette.

3. Module de batterie remplaçable selon la revendication 2, dans lequel
la partie ailette est espacée de la surface de fond (111) de la rainure et s'étend à partir d'une paroi latérale (113) de la rainure.

4. Module de batterie remplaçable selon la revendication 2, dans lequel
l'élément de verrouillage comprend : une extrémité (121) reliée à la partie ailette pour fixer la position ; et
l'autre extrémité (122) ayant une partie tête de type crochet et prévue de manière mobile dans une première direction (h1) plus proche de la surface de fond de la rainure ou une seconde direction (h2) plus éloignée de la surface de fond de la rainure.

5. Module de batterie remplaçable selon la revendication 4, dans lequel dans l'autre extrémité de l'élément de verrouillage,
la partie tête de type crochet est pressée par la saillie inclinée pour se déplacer dans la première direction lors du passage à travers la saillie inclinée avec un ajustement serré, et
la partie tête de type crochet est libérée de la force pressée par la saillie inclinée pour se déplacer dans la seconde direction à la fin du passage de la saillie inclinée.

6. Module de batterie remplaçable selon la revendication 4, dans lequel
la partie tête de type crochet comprend : une partie d'ajustement serré (122a) prévue de sorte que l'épaisseur soit réduite le long de la direction de montage du bloc-batterie pour être capable de passer à travers la saillie inclinée avec un ajustement serré ; et
une partie de fixation de verrouillage (112b) prévue de sorte que l'épaisseur augmente le long de la direction de montage du bloc-batterie pour être verrouillée et fixée avec la saillie inclinée lorsque le passage est terminé.

7. Module de batterie remplaçable selon la revendication 6, dans lequel
la saillie inclinée a : une partie inclinée extérieure (221) en contact avec la partie d'ajustement serré lorsque le bloc-batterie est monté et prévue de sorte que l'épaisseur augmente le long de la direction de montage du bloc-batterie ; et
une partie inclinée intérieure (222) en contact avec la partie de fixation de verrouillage après que la partie tête de type crochet est passée à travers la partie inclinée extérieure et prévue de sorte que l'épaisseur diminue le long de la direction de montage du bloc-batterie.

8. Module de batterie remplaçable selon la revendication 7, dans lequel lorsque le bloc-batterie est monté,
la partie d'ajustement serré passe à travers la saillie inclinée tout en glissant le long de la partie inclinée extérieure de la saillie inclinée.

9. Module de batterie remplaçable selon la revendication 6, dans lequel lorsque le bloc-batterie monté dans l'espace de montage est séparé,
la partie de fixation de verrouillage passe à travers la saillie inclinée tout en glissant le long de la partie inclinée intérieure de la saillie inclinée.

10. Module de batterie remplaçable selon la revendication 1, dans lequel l'élément de verrouillage est fait d'un matériau élastique.

11. Module de batterie remplaçable selon la revendication 1, dans lequel
l'élément de verrouillage est prévu de sorte qu'une région partielle soit courbée lorsqu'une force externe est appliquée sur celle-ci.

12. Véhicule électrique comprenant le module de batterie remplaçable selon la revendication 1.

13. Station d'échange de batterie comprenant le module de batterie remplaçable selon la revendication 1.
